# FASCICULE DE BREVET EUROPEEN

(11) **EP 3 803 080 B1**
(45) Date de publication et mention de la délivrance du brevet: **04.01.2023**
(21) Numéro de dépôt: 19737167.7
(22) Date de dépôt: 23.05.2019
(51) Int. Cl.: F02B 75/04, F16C 1/00, F16C 3/06, F16C 7/06

(54) **VILEBREQUIN POUR UN MOTEUR À RAPPORT VOLUMÉTRIQUE VARIABLE PILOTÉ**
KURBELWELLE FÜR EINEN MOTOR MIT GESTEUERTEM VARIABLEM VERDICHTUNGSVERHÄLTNIS
CRANKSHAFT FOR A CONTROLLED VARIABLE COMPRESSION RATIO ENGINE

(30) Priorité: 25.05.2018 FR 1854434
(43) Date de publication de la demande: 14.04.2021
(73) Titulaire: MCE 5 Development, 69100 Villeurbanne (FR)
(72) Inventeur: BERTHEAU, René-Pierre, 01330 Amberieux-en-Dombes (FR); DURY, Philippe, 01300 Saint-Jean-de-Niost (FR); MIEHE, Yves, 69003 LYON (FR)
(74) Mandataire: IP Trust
(86) Numéro de dépôt international: PCT/FR2019/051178
(87) Numéro de publication internationale: WO 2019/224485

(56) Documents cités:
- EP-A1- 0 438 121
- WO-A1-2007/085738
- FR-A1- 3 040 437
- FR-A1- 3 053 734
- US-A1- 2008 184 966

## Description

### DOMAINE DE L'INVENTION

La présente invention concerne le domaine des moteurs à rapport volumétrique variable, mettant en œuvre une bielle dont la longueur est pilotée. La présente invention concerne en particulier un vilebrequin configuré pour piloter les actionneurs d'une bielle à longueur variable.

### ARRIERE PLAN TECHNOLOGIQUE DE L'INVENTION

Parmi les solutions permettant de rendre variable le rapport volumétrique d'un moteur, on connaît celles mettant en œuvre une bielle dont l'entraxe (c'est-à-dire la longueur de la bielle) peut être piloté. Lorsque la bielle présente une première longueur, le moteur est configuré pour présenter un premier rapport volumétrique. Lorsque la bielle présente une deuxième longueur, le moteur est configuré pour présenter un deuxième rapport volumétrique.

La bielle peut être du type télescopique ou du type excentrique. D'une manière générale, la bielle est munie d'un système, souvent de nature hydromécanique, permettant l'ajustement de sa longueur.

Quelle que soit la forme retenue, la bielle peut être configurée pour permettre un ajustement continu de sa longueur, entre sa première longueur et sa deuxième longueur, de sorte à ajuster continûment le rapport volumétrique du moteur. Alternativement, la bielle peut être dite « bistable » : alors seule sa première et sa deuxième longueur forment des positions stables permettant de définir deux modes de fonctionnement du moteur, chaque mode correspondant à un rapport volumétrique déterminé.

Le pilotage de la bielle consiste à commander le système hydromécanique d'ajustement de sa longueur à une longueur cible, de manière à conférer au moteur un rapport volumétrique de consigne.

Selon une première approche connue, par exemple décrite dans le document WO2015193437, la transmission de la consigne est réalisée mécaniquement. Le pilotage est obtenu par entrechoquement, alors que la bielle est entraînée par le vilebrequin, entre un actionneur du système d'ajustement (par exemple le tiroir d'un distributeur hydraulique) et une pièce de commande fixée au bloc moteur. L'entrechoquement se produit à très haute vélocité, et ce pilotage au choc demande un positionnement extrêmement précis de la pièce de commande dans le bloc moteur, ce qui rend sa fabrication particulièrement complexe et onéreuse. Par ailleurs, ce mode de pilotage conduit à une émission acoustique importante et à une usure rapide des pièces qui entrent en contact.

Selon une autre approche connue, la transmission de la consigne est réalisée par des moyens hydrauliques. Ainsi, le document WO2016203047 ou le document US2008/0184966 prévoit d'utiliser le circuit de lubrification des coussinets de la bielle pour agir sur un actionneur du système d'ajustement de la longueur de bielle via un changement de la consigne de pression d'huile. Un inconvénient de ce type de pilotage hydraulique est une forte inertie à la commande, liée notamment au fait que les systèmes de lubrification concernent l'ensemble du moteur, et qu'il faut donc appliquer le changement de pression à la totalité du volume du circuit de lubrification pour avoir un effet ; un autre inconvénient de ce type de pilotage hydraulique est une grande sensibilité au régime moteur, liée à l'effet d'inertie sur la masse des colonnes d'huiles entrainées par le vilebrequin en rotation.

Par ailleurs, le circuit de lubrification étant commun à tous les paliers du vilebrequin, il n'est pas possible de faire un pilotage sélectif cylindre à cylindre.

### OBJET DE L'INVENTION

La présente invention vise à pallier tout ou partie des inconvénients précités. Elle concerne un vilebrequin pour piloter la longueur de bielle d'un moteur à rapport volumétrique piloté.

### BREVE DESCRIPTION DE L'INVENTION

La présente invention concerne un vilebrequin pour moteur à rapport volumétrique piloté, présentant un axe de rotation définissant un axe longitudinal. Le vilebrequin comprend au moins un maneton, au moins un tourillon reliés par un bras de liaison, et au moins un élément de pilotage apte à se déplacer en translation selon l'axe longitudinal pour coopérer avec un actionneur d'un système d'ajustement de longueur d'une bielle.

Le vilebrequin selon l'invention est remarquable en ce que l'élément de pilotage, disposé au niveau du bras de liaison, comprend une partie annulaire coaxiale au maneton et susceptible d'établir un contact continu avec l'actionneur du système d'ajustement de longueur de la bielle, quelle que soit la position angulaire du vilebrequin.

Le vilebrequin comprend en outre un circuit fluidique de pilotage pour déplacer l'élément de pilotage selon l'axe longitudinal.

La partie annulaire autorise une mise en contact de l'élément de pilotage avec l'actionneur du système d'ajustement de longueur de bielle pour toutes les positions angulaires du vilebrequin. Le vilebrequin selon l'invention évite ainsi un pilotage par choc dont les inconvénients ont été évoqués en introduction.

Le déplacement de l'élément de pilotage selon l'axe longitudinal, pour entrer en contact avec l'actionneur ou pour s'écarter de celui-ci, est opéré avec un circuit fluidique de pilotage indépendant du circuit de lubrification. L'intérêt d'un circuit indépendant est multiple ; d'un part, il permet de réduire le volume de fluide nécessaire pour transmettre l'information de commande, réduisant ainsi l'inertie à la commande. D'autre part, il permet de travailler à des niveaux de pression qui ne sont pas liés à la fonction de lubrification : on peut ainsi par exemple travailler avec une commande qui oscille entre pression et dépression pour obtenir un effet de rappel de la commande. Enfin, il permet de travailler avec un fluide autre que l'huile, par exemple un gaz, ce qui permet de s'affranchir des effets d'inertie liés à la vitesse de rotation du vilebrequin, susceptibles de perturber la commande.

Selon d'autres caractéristiques avantageuses et non limitatives de l'invention, prises seules ou selon toute combinaison techniquement réalisable :
- l'élément de pilotage est disposé dans une cavité annulaire du bras de liaison, à une extrémité du maneton et le circuit fluidique comprend un orifice débouchant dans la cavité ;
- le vilebrequin comprend un étrier fixé sur le bras de liaison pour former une butée de fin de course de l'élément de pilotage ;
- l'élément de pilotage est disposé sur le bras de liaison et coopère avec deux épaulements aménagés à une extrémité du maneton ou dans une partie du bras de liaison attenante au maneton, et le circuit fluidique comprend un orifice débouchant entre les deux épaulements ;
- le circuit fluidique de pilotage commande le déplacement en translation de l'élément de pilotage selon une première direction, par pression d'un fluide ;
- le circuit fluidique de pilotage commande le déplacement en translation de l'élément de pilotage selon une deuxième direction, opposée à la première direction, par dépression ;
- le fluide est un gaz ou un liquide ;
- le vilebrequin comprend un organe de rappel pour déplacer en translation l'élément de pilotage selon l'axe longitudinal, dans une deuxième direction opposée à la première direction ;
- le circuit fluidique de pilotage est formé par des perçages dans le vilebrequin, communiquant sur toute la longueur de ce dernier depuis une de ses extrémités ;
- le vilebrequin comprend un élément de pilotage, disposé au niveau de chaque bras de liaison, de part et d'autre de chaque maneton ;
- les deux éléments de pilotage disposés de part et d'autre du maneton sont commandés par deux circuits fluidiques de pilotage distincts ;
- les deux éléments de pilotage disposés de part et d'autre du maneton sont commandés par le même circuit fluidique de pilotage ;
- le circuit fluidique de pilotage comprend au moins un distributeur fluidique pour ouvrir ou fermer la communication fluidique vers l'un ou l'autre des deux éléments de pilotage, en fonction du niveau de pression dans le circuit fluidique ;
- un maneton est configuré pour recevoir deux bielles.

La présente invention concerne également un moteur à rapport volumétrique variable piloté comprenant :
- Un bloc-moteur,
- Un vilebrequin tel que ci-dessus, disposé dans le bloc-moteur,
- Au moins une bielle de longueur variable associée à un maneton du vilebrequin, la bielle comprenant un système d'ajustement de longueur et un actionneur dudit système, positionné au niveau d'un flanc de la tête de bielle.

Selon d'autres caractéristiques avantageuses et non limitatives de l'invention, prises seules ou selon toute combinaison techniquement réalisable :
- le vilebrequin est relié par une liaison tournante étanche à au moins un système externe de pilotage, ce dernier étant configuré pour acheminer un fluide dans le circuit fluidique de pilotage dudit vilebrequin et étant piloté par une unité de contrôle du moteur ;
- la bielle est télescopique ou excentrique, bi-taux, tri-taux ou à taux continu ;
- le moteur à rapport volumétrique variable piloté comprend une pluralité de bielles de longueur variable et le circuit fluidique de pilotage du vilebrequin est commun auxdites bielles ;
- le moteur à rapport volumétrique variable piloté comprend une pluralité de bielles de longueur variable et le vilebrequin comprend au moins un circuit fluidique de pilotage dédié à chacune des bielles.

### BREVE DESCRIPTION DES DESSINS

D'autres caractéristiques et avantages de l'invention ressortiront de la description détaillée de l'invention qui va suivre en référence aux figures annexées sur lesquels :
- la figure 1 représente une partie d'un vilebrequin conforme à l'invention ;
- la figure 2 représente un schéma en coupe d'une bielle montée sur un vilebrequin conforme à l'invention ;
- la figure 3 représente une partie d'un vilebrequin conforme à l'invention ;
- les figures 4a à 4d représentent un vilebrequin selon un premier mode de réalisation de l'invention ;
- les figures 5a et 5c représentent un vilebrequin selon un deuxième mode de réalisation de l'invention ;
- la figure 5b représente un élément de pilotage du vilebrequin selon le deuxième mode de réalisation de l'invention ;
- les figures 5d, 5e présentent différentes configurations de circuit fluidique de pilotage lorsque deux éléments de pilotage sont disposés de part et d'autre d'un maneton, dans un vilebrequin conforme à l'invention ;
- la figure 6 représente un vilebrequin conforme à l'invention et deux bielles associées à un maneton dudit vilebrequin ;
- la figure 7 représente d'un moteur à rapport volumétrique piloté, conforme à l'invention.

Les mêmes références sur les figures pourront être utilisées pour des éléments de même type.

### DESCRIPTION DETAILLEE DE L'INVENTION

L'invention concerne un vilebrequin 100 configuré pour piloter la longueur de bielle dans un moteur à rapport volumétrique variable. Dans un tel moteur, la bielle comprend un système d'ajustement de sa longueur et un actionneur positionné au niveau d'un flanc de la tête de bielle, comme évoqué en introduction.

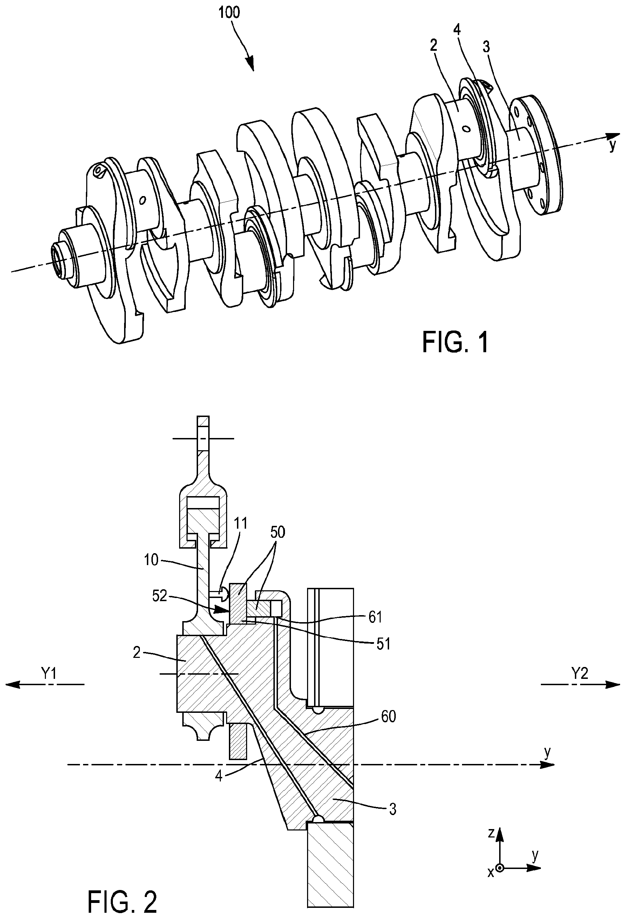

Le vilebrequin 100 présente un axe de rotation définissant un axe longitudinal y et comprend au moins un maneton 2 et au moins un tourillon 3 reliés par un bras de liaison 4. Sur l'exemple de la figure 1, le vilebrequin 1 comprend quatre manetons 2 reliés à chacune de leurs extrémités à un bras de liaison 4.

Comme schématisé sur la figure 2, le vilebrequin 100 comprend en outre au moins un élément de pilotage 50. L'élément de pilotage 50 est apte à se déplacer en translation selon l'axe longitudinal y pour coopérer avec un actionneur 11 d'un système d'ajustement de longueur d'une bielle 10 associée au maneton 2.

Préférentiellement, la course totale de l'élément de pilotage 50 varie de 1 à 2mm environ, en fonction des configurations et modes de réalisation.

L'élément de pilotage 50 est disposé au niveau du bras de liaison 4, à une extrémité du maneton 2. Il comprend une partie annulaire 51 dont une surface plane 52 s'étend dans un plan (x,z) normal à l'axe longitudinal y. La partie annulaire 51 est coaxiale au maneton 2 et elle est susceptible d'établir un contact continu, par sa surface plane 52, avec l'actionneur 11 du système d'ajustement de longueur de la bielle 10, quelle que soit la position angulaire du vilebrequin 1. Une telle configuration présente l'avantage d'une transmission mécanique de la consigne d'ajustement de longueur de bielle sans choc.

Le vilebrequin 100 comprend également un circuit fluidique de pilotage 60 configuré pour déplacer l'élément de pilotage 50 selon l'axe longitudinal y. Le circuit fluidique 60 comporte au moins un orifice 61 destiné à faire communiquer un fluide avec une surface arrière (opposée à la surface plane 52) de l'élément de pilotage 50. Le fluide pourra être un gaz ou un liquide. Un fluide gazeux présente l'avantage d'être moins influencé par la rotation du vilebrequin, comparativement à un fluide liquide, du fait de sa très faible densité.

Selon une première variante avantageuse, le fluide est un gaz, par exemple de l'air comprimé, et la mise sous pression dudit fluide commande le déplacement en translation de l'élément de pilotage 50 selon une première direction Y1 (figure 2) ; préférentiellement une butée sera prévue pour limiter le déplacement en translation (butée de fin de course - non représentée) dudit élément de pilotage 50. Le déplacement en translation de l'élément de pilotage 50 selon une deuxième direction Y2, opposée à la première direction Y1, pourra être opéré par mise en dépression du circuit fluidique 60.

Selon une deuxième variante, le vilebrequin 100 comprend au moins un organe de rappel (non représenté) pour déplacer en translation l'élément de pilotage 50 selon l'axe longitudinal y, dans la deuxième direction Y2. L'organe de rappel pourra être porté par la bielle 10 ou par le vilebrequin 100 et comprendre par exemple un système à ressort.

Alternativement, le vilebrequin 100 présente une combinaison des deux variantes précitées, pour déplacer en translation l'élément de pilotage 50 selon l'axe longitudinal y, dans la deuxième direction Y2 : au moins un organe de rappel et la mise en dépression du circuit fluidique 60.

A titre d'exemple, les pressions de fluide utilisées dans le circuit fluidique de pilotage 60 pour commander le déplacement en translation de l'élément de pilotage 50 selon la première direction Y1, seront de l'ordre de quelques bars, typiquement inférieures à 5 bars.

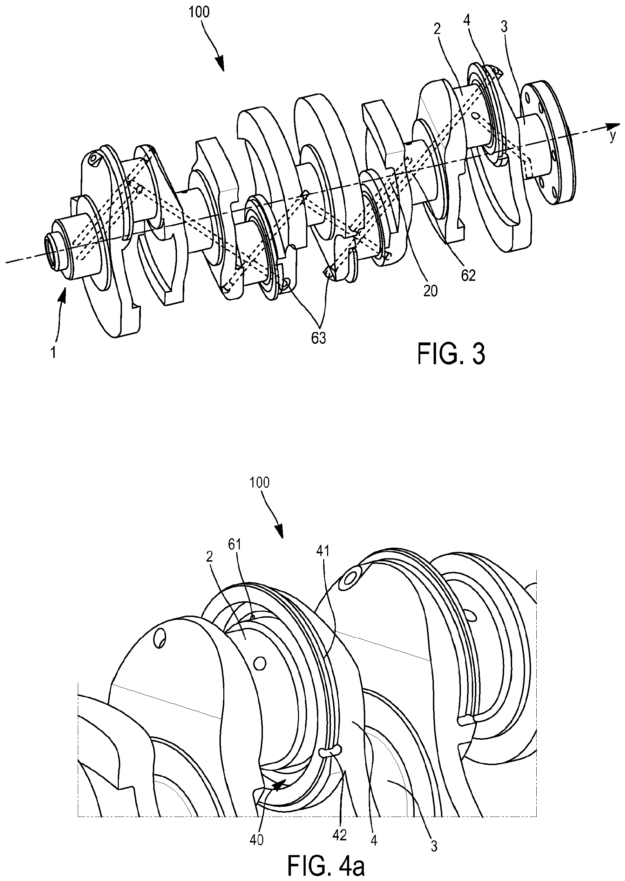

Avantageusement, le circuit fluidique de pilotage 60 est formé par des conduits percés 62 sur toute la longueur du vilebrequin 100, depuis l'une de ses extrémités 1 jusqu'au dernier maneton 2, opposé à cette extrémité (figure 3). Ces différents perçages 62 s'intersectent au niveau du (au moins un) maneton et du (au moins un tourillon). Le circuit fluidique 60 présente au moins un orifice de sortie du fluide au niveau du bras de liaison 4, comme énoncé précédemment, pour communiquer avec la surface arrière de l'élément de pilotage 50.

Les perçages 62 dans le vilebrequin 100 sont indépendants de ceux de lubrification 20 reliant maneton 2 et tourillon 3, ils sont donc effectués de manière à éviter lesdits conduits de lubrification 20. Les conduits 62 pourront par exemple présenter un diamètre de l'ordre de 4mm.

L'intérêt d'un circuit fluidique 60 indépendant est multiple ; d'un part, il permet de réduire le volume de fluide nécessaire pour transmettre l'information de commande, réduisant ainsi l'inertie à la commande. D'autre part, il permet de travailler à des niveaux de pression qui ne sont pas liés à la fonction de lubrification : on peut ainsi par exemple travailler avec une commande qui oscille entre pression et dépression pour obtenir un effet de rappel de la commande. Enfin, il permet de travailler avec un fluide autre que l'huile, par exemple un gaz, ce qui permet de s'affranchir des effets d'inertie liés à la vitesse de rotation du vilebrequin, susceptibles de perturber la commande.

L'étanchéité du circuit fluidique de pilotage 60 est assurée par une série de bouchonnage 63 au niveau du débouché de chaque perçage 62 vers l'extérieur du vilebrequin 1 (figures 3, 4d et 5c).

Selon un premier mode de réalisation de l'invention, une cavité annulaire 40 est aménagée dans le bras de liaison 4, à une extrémité du maneton 2 (figure 4a). Cette cavité est destinée à former le corps de vérin d'un piston annulaire, lui-même formé par l'élément de pilotage 50. Un orifice de sortie 61 du fluide du circuit fluidique de pilotage 60 débouche dans la cavité 40. Le bras de liaison 4 comporte également un centrage extérieur 41, coaxial au maneton 2 ainsi que deux logements d'ergots 42, dont nous détaillerons plus tard la fonction. Notons que les particularités précitées constituent des modifications réalisables par usinage d'un vilebrequin standard.

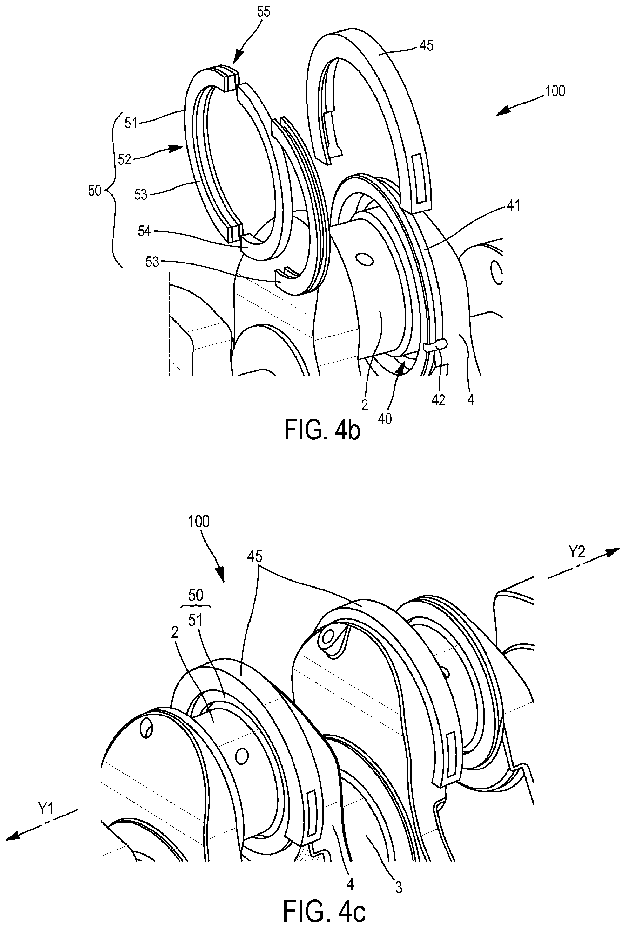

Selon ce premier mode de réalisation, l'élément de pilotage 50 comprend deux demi-armatures 53 (figure 4b), par exemple à profil en H, destinées à être assemblées autour du maneton 2, puis positionnées dans la cavité annulaire 40. Avantageusement, les demi-armatures 53 sont métalliques. Des goupilles sont prévues pour aligner et solidariser les deux demi-armatures 53 après leur montage.

Sur chacune des demi-armatures 53, vient se surmouler un élastomère 54 destiné à assurer l'étanchéité entre la surface arrière 55 et la surface plane 52 de l'élément de pilotage 50, lorsque ce dernier est disposé dans la cavité annulaire 40.

Selon ce premier mode de réalisation, le vilebrequin 100 comprend un étrier 45 venant se centrer au niveau du centrage extérieur 41 et s'enclipser directement sur le bras de liaison 4, au niveau des logements d'ergots 42. L'étrier 45 forme une butée de fin de course de l'élément de pilotage 50, lorsque ce dernier se déplace selon l'axe longitudinal y, dans la première direction Y1. Il présente préférentiellement un segment annulaire, permettant d'uniformiser les points de butée contre la partie annulaire 51 de l'élément de pilotage 50.

Avantageusement, l'étrier 45 peut également jouer le rôle de butée latérale de tête de bielle 10.

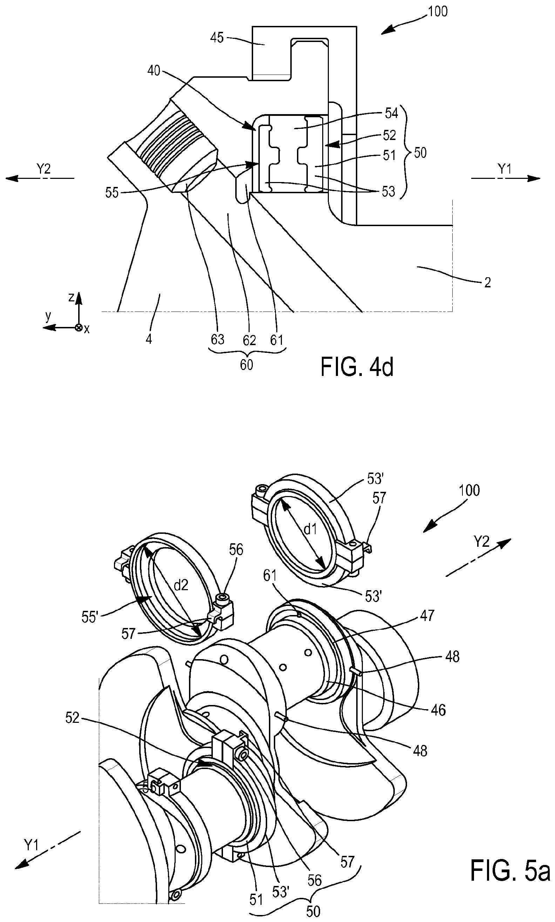

Comme illustré sur les figures 4c et 4d, la partie annulaire 51 de l'élément de pilotage 50 (formant le piston annulaire) présente une surface plane 52 susceptible d'établir un contact continu avec l'actionneur 11 du système d'ajustement de longueur d'une bielle 10 associée au maneton 2. Le contact avec l'actionneur 11 peut s'établir lorsque l'élément de pilotage 50 est déplacé dans la première direction Y1. Ce déplacement est provoqué par l'application d'une pression de fluide sur la surface arrière 55 de l'élément de pilotage 50. Le fluide est acheminé jusqu'à la cavité annulaire 40 (à l'arrière de l'élément de pilotage 50) par un conduit 62 du circuit fluidique de pilotage 60.

La mise en dépression du circuit fluidique 60 provoque un déplacement de l'élément de pilotage 50 dans la deuxième direction Y2, et interrompt ainsi le contact avec l'actionneur 11 du système d'ajustement de la bielle 10. Alternativement, un organe de rappel peut être aménagé, de manière à repousser l'élément de pilotage 50 lorsque la pression de fluide sur sa surface arrière 55 passe en dessous d'une valeur seuil.

Selon un deuxième mode de réalisation de l'invention, le vilebrequin 100 comporte deux épaulements 46,47 formant deux couronnes circulaires de diamètres différents et normales à l'axe du maneton 2 (figure 5a). Ces épaulements 46,47 sont aménagés à une extrémité du maneton 2. Ils sont réalisés sur le maneton 2 ou sur la partie du bras de liaison 4 attenante au maneton 2. Un orifice de sortie 61 du fluide du circuit fluidique de pilotage 60 débouche entre les deux épaulements 46,47.

Notons que, dans ce deuxième mode de réalisation également, les particularités précitées constituent des modifications réalisables par usinage d'un vilebrequin standard.

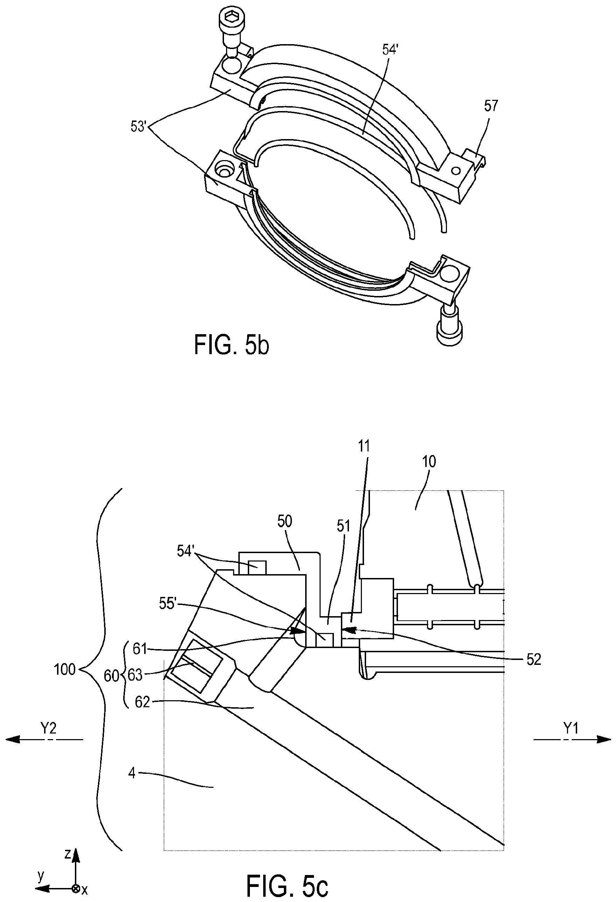

Selon ce deuxième mode de réalisation, l'élément de pilotage 50 comprend deux demi-coquilles 53' (figures 5a,5b) destinées à être assemblées entre elles, et à coopérer avec les deux épaulements 46,47. Pour coopérer avec les épaulements, l'assemblage de demi-coquilles 53' présentent donc un diamètre en face avant d1 et un diamètre en face arrière d2, différents, et qui sont définis pour entourer respectivement les épaulements 46,47.

Préférentiellement, les demi-coquilles 53' sont métalliques. Des centrages et fixations 56 sont prévus pour aligner et solidariser les deux demi-coquilles 53' après leur montage sur le bras de liaison 4. Une variante par système d'agrafes peut également être envisagée pour la solidarisation des demi-coquilles 53' entre elles.

Pour assurer l'étanchéité, un matériau de type élastomère 54' est disposé dans des gorges adaptées dans chaque demi-coquille 53' (figure 5b). Un élastomère 54' assure l'étanchéité entre l'assemblage de demi-coquilles 53' et l'épaulement de plus petit diamètre 46, au niveau du diamètre en face avant d1. Un autre élastomère 54' assure l'étanchéité entre l'assemblage de demi-coquilles 53' et l'épaulement de plus grand diamètre 47, au niveau du diamètre en face arrière d2. Enfin, un élastomère 54' assure l'étanchéité entre les deux demi-coquilles 53'. Le fluide du circuit fluidique de pilotage 60, en communication avec la surface interne 55' de l'élément de pilotage 50 (face interne de l'assemblage de demi-coquilles 53') est maintenu de manière étanche entre dans l'espace entre ladite surface interne 55' et le bras de liaison 4.

L'assemblage de demi-coquilles 53' enserre les deux épaulements 46,47, et assure l'étanchéité, tout en conservant la capacité de se déplacer en translation selon l'axe longitudinal y.

Une butée est également obligatoire pour limiter la course de l'élément de pilotage 50 dans la première direction Y1, limitant également les frottements excessifs au niveau des flancs de bielle 10. A titre d'exemple, des goupilles 48 sont plantées latéralement dans le bras de liaison 4 et des profils 57 en forme d'ergots sont intégrés dans l'une des demi-coquilles 53' pour coopérer avec les goupilles 48 (figure 5a).

Comme illustré sur les figures 5a et 5c, la partie annulaire 51 de l'élément de pilotage 50 présente une surface de révolution, sensiblement plane 52 susceptible d'établir un contact continu avec l'actionneur 11 du système d'ajustement de longueur d'une bielle 10 associée au maneton 2. Le contact peut s'établir lorsque l'élément de pilotage 50 est déplacé dans la première direction Y1. Ce déplacement est provoqué par l'application d'une pression de fluide sur la surface interne 55' de l'élément de pilotage 50. Le fluide est acheminé jusqu'à ladite face arrière 55' par un conduit du circuit fluidique de pilotage 60.

La mise en dépression du circuit fluidique 60 provoque un déplacement de l'élément de pilotage 50 dans la deuxième direction Y2, et interrompt ainsi le contact avec l'actionneur du système d'ajustement de la bielle 10. Alternativement, un organe de rappel peut être aménagé, de manière à repousser l'élément de pilotage 50 lorsque la pression de fluide sur sa surface arrière 55' passe en dessous d'une valeur seuil.

Selon une variante, applicable aux différents modes de réalisation de la présente invention, un élément de pilotage 50 est disposé au niveau de chaque bras de liaison 4, de part et d'autre de chaque maneton 2 du vilebrequin 100, comme par exemple illustré en figure 5a.

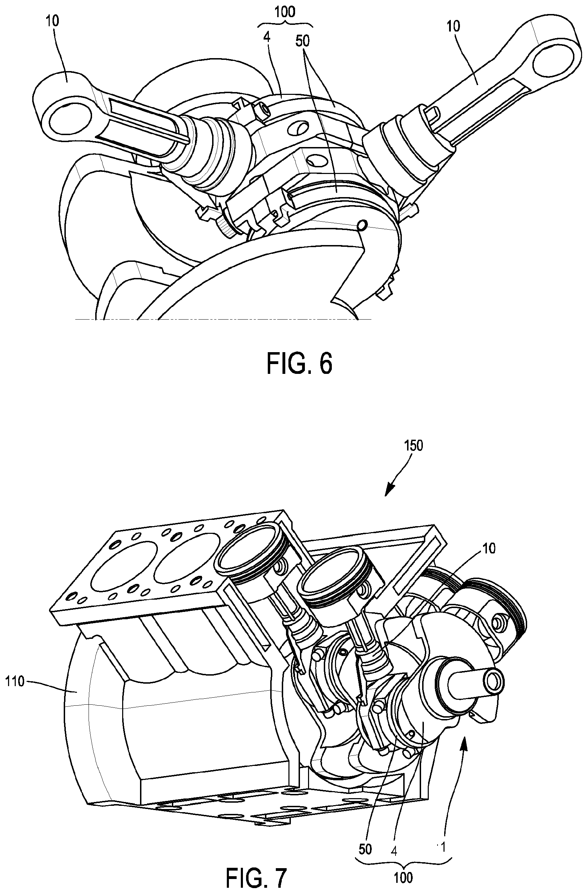

Une telle configuration peut permettre le pilotage d'une bielle 10 tri-taux comportant deux actionneurs chacun positionné sur un flanc à proximité de la tête de bielle. Elle permet également le pilotage de deux bielles 10, lorsque le maneton 2 est justement configuré pour recevoir deux bielles 10 (figure 6).

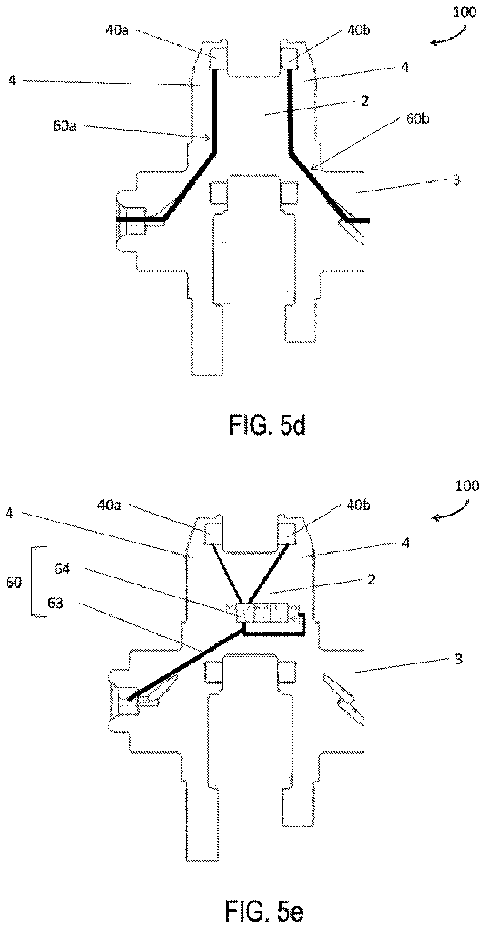

Quel que soit le type de pilotage recherché, les deux éléments de pilotage 50 disposés de part et d'autre d'un même maneton 2 peuvent être commandés par deux circuits fluidiques distincts 60a,60b : la figure 5d schématise ces deux circuits 60a,60b alimentant chacun une cavité annulaire 40a,40b devant laquelle sera positionnée la surface interne 55' de l'élément de pilotage 50 (non représenté). La mise en œuvre de deux circuits fluidiques 60a,60b séparés permet de commander chaque élément de pilotage 50 indépendamment l'un de l'autre.

Alternativement, les deux éléments de pilotage 50 disposés de part et d'autre d'un même maneton 2 peuvent être commandés par un même circuit fluidique 60 (figure 5e).

Dans ce cas, selon une première option (non représentée), un clapet pré-chargé est disposé dans le conduit alimentant la deuxième cavité annulaire 40b. Pour un premier niveau de pression dans le circuit fluidique 60, seule la première cavité annulaire 40a sera alimentée et donc seul l'élément de pilotage 50 relié à cette première cavité 40a sera déplacé. Pour un deuxième niveau de pression, le clapet pré-chargé laissera passer le fluide vers la deuxième cavité annulaire 40b, ce qui mènera au déplacement de l'élément de pilotage 50 relié à la deuxième cavité 40b.

Selon une deuxième option illustrée sur la figure 5e, un distributeur fluidique 64, inclus dans le circuit fluidique 60, permet de commander l'ouverture ou la fermeture fluidique, vers l'une ou l'autre des cavités annulaires 40a,40b, (devant laquelle sera positionnée la surface interne 55' d'un élément de pilotage 50) en fonction du niveau de pression dans le circuit 60. Selon le niveau de pression, l'un ou l'autre des éléments de pilotage 50 sera donc déplacé, en vue de coopérer avec un actionneur 11 de la bielle.

L'invention concerne également un moteur 150 à rapport volumétrique variable piloté. La figure 7 illustre un moteur 150 selon l'invention, présentant une architecture en V. Alternativement, il pourrait bien-sur présenter une architecture en ligne.

Le moteur 150 comprend un bloc-moteur 110 et un vilebrequin 100 tel que décrit précédemment, disposé dans le bloc-moteur 110. Le moteur 150 comprend en outre au moins une bielle 10 de longueur variable associée à un maneton 2 du vilebrequin 100.

La bielle 10 comprend un système d'ajustement de longueur et un actionneur 11 positionné au niveau d'un flanc de la tête de bielle 10. En particulier, l'élément de pilotage 50 porté par le vilebrequin 100 est positionné et dimensionné de manière à être en vis-à-vis de l'actionneur 11. Tout type de bielle 10 de l'état de la technique pourra être utilisé dans le moteur selon l'invention, bielle télescopique ou excentrique, fonctionnant à taux continu, à bi-taux ou tri-taux.

Le circuit fluidique de pilotage 60 du vilebrequin 100 est relié à l'extérieur par l'extrémité 1 du vilebrequin 100. Ladite extrémité 1 est aménagée pour recevoir une étanchéité tournante permettant la liaison entre partie tournante (vilebrequin) et partie fixe (bloc-moteur) et permettant ainsi la connexion fluidique du circuit de pilotage 60 avec un système externe de pilotage, disposé à l'extérieur du bloc-moteur 110. Notons que la connexion fluidique pourra être axiale, c'est-à-dire selon l'axe longitudinal du vilebrequin 100, ou radiale, c'est-à-dire dans un plan normal à l'axe longitudinal y, par exemple au niveau d'un tourillon 3 du vilebrequin 100.

Le système externe de pilotage est configuré pour acheminer le fluide dans le circuit de pilotage 60. Il comprend notamment une source de pression telle que par exemple un compresseur à air, lorsque le fluide est de l'air comprimé. Pour mettre le circuit de pilotage 60 en dépression (et piloter le déplacement de l'élément de pilotage 50 dans la deuxième direction Y2), le système externe de pilotage peut également comprendre une pompe à vide dédiée ou mutualisée. Le système externe de pilotage est commandé par l'unité de contrôle du moteur (calculateur), en fonction du régime et de la charge du moteur.

Bien entendu, l'invention n'est pas limitée aux modes de mise en œuvre décrits et on peut y apporter des variantes de réalisation sans sortir du cadre de l'invention tel que défini par les revendications.

## Revendications

1. Vilebrequin (100) pour moteur à rapport volumétrique variable piloté (150), présentant un axe de rotation définissant un axe longitudinal (y) et comprenant au moins un maneton (2), au moins un tourillon (3) reliés par un bras de liaison (4), et au moins un élément de pilotage (50) apte à se déplacer en translation selon l'axe longitudinal (y) pour coopérer avec un actionneur (11) d'un système d'ajustement de longueur d'une bielle (10), Le vilebrequin (100) étant **caractérisé en ce que** :
• l'élément de pilotage (50), disposé au niveau du bras de liaison (4), comprend une partie annulaire (51) coaxiale au maneton (2) et susceptible d'établir un contact continu avec l'actionneur (11) du système d'ajustement de longueur de la bielle (10), quelle que soit la position angulaire du vilebrequin (100),
• le vilebrequin (100) comprend un circuit fluidique de pilotage (60) pour déplacer l'élément de pilotage (50) selon l'axe longitudinal (y).

2. Vilebrequin (100) selon la revendication précédente, dans lequel l'élément de pilotage (50) est disposé dans une cavité annulaire (40) du bras de liaison (4), à une extrémité du maneton (2) et dans lequel le circuit fluidique (60) comprend un orifice (61) débouchant dans la cavité (40).

3. Vilebrequin (100) selon la revendication précédente, comprenant un étrier (45) fixé sur le bras de liaison (4) pour former une butée de fin de course de l'élément de pilotage (50).

4. Vilebrequin (100) selon la revendication 1, dans lequel l'élément de pilotage (50) est disposé sur le bras de liaison (4) et coopère avec deux épaulements (46,47) aménagés à une extrémité du maneton (2) ou dans une partie du bras de liaison (4) attenante au maneton (2), et dans lequel le circuit fluidique (60) comprend un orifice (61) débouchant entre les deux épaulements (46,47).

5. Vilebrequin (100) selon l'une des revendications précédentes, dans lequel le circuit fluidique de pilotage (60) commande le déplacement en translation de l'élément de pilotage (50) selon une première direction (Y1), par pression d'un fluide.

6. Vilebrequin (100) selon l'une des revendications précédentes, dans lequel le circuit fluidique de pilotage (60) commande le déplacement en translation de l'élément de pilotage (50) selon une deuxième direction (Y2), opposée à la première direction (Y1), par dépression.

7. Vilebrequin (100) selon l'une des deux revendications précédentes, dans lequel le fluide est un gaz ou un liquide.

8. Vilebrequin (100) selon la revendication 5 ou 6, comprenant un organe de rappel pour déplacer en translation l'élément de pilotage (50) selon l'axe longitudinal (y), dans une deuxième direction (Y2) opposée à la première direction (Y1).

9. Vilebrequin (100) selon l'une des revendications précédentes, dans lequel le circuit fluidique de pilotage (60) est formé par des perçages (62) dans le vilebrequin (100), communiquant sur toute la longueur de ce dernier depuis une de ses extrémités (1).

10. Vilebrequin (100) selon l'une des revendications précédentes comprenant un élément de pilotage (50), disposé au niveau de chaque bras de liaison (4), de part et d'autre de chaque maneton (2).

11. Vilebrequin (100) selon la revendication précédente dans lequel les deux éléments de pilotage (50) disposés de part et d'autre du maneton (2) sont commandés par deux circuits fluidiques de pilotage (60) distincts.

12. Vilebrequin (100) selon la revendication 10 dans lequel les deux éléments de pilotage (50) disposés de part et d'autre du maneton (2) sont commandés par un même circuit fluidique de pilotage (60).

13. Vilebrequin (100) selon la revendication précédente dans lequel le circuit fluidique de pilotage (60) comprend au moins un distributeur fluidique pour ouvrir ou fermer la communication fluidique vers l'un ou l'autre des deux éléments de pilotage (50), en fonction du niveau de pression dans le circuit fluidique (60).

14. Vilebrequin (100) selon l'une des quatre revendications précédentes dans lequel un maneton (2) est configuré pour recevoir deux bielles (10).

15. Moteur à rapport volumétrique variable piloté (150) comprenant :
• Un bloc-moteur (110),
• Un vilebrequin (100) selon l'une des revendications précédentes, disposé dans le bloc-moteur (110),
• Au moins une bielle de longueur variable (10) associée à un maneton (2) du vilebrequin (100), la bielle (10) comprenant un système d'ajustement de longueur et un actionneur (11) dudit système, positionné au niveau d'un flanc de la tête de bielle (10) .

16. Moteur à rapport volumétrique variable piloté (150) selon la revendication précédente, dans lequel le vilebrequin (100) est relié par une liaison tournante étanche à au moins un système externe de pilotage, ce dernier étant configuré pour acheminer un fluide dans le circuit fluidique de pilotage (60) dudit vilebrequin (100) et étant piloté par une unité de contrôle du moteur (150).

17. Moteur à rapport volumétrique variable piloté (150) selon l'une des deux revendications précédentes, dans lequel la bielle (10) est télescopique ou excentrique, bi-taux, tri-taux ou à taux continu.

18. Moteur à rapport volumétrique variable piloté (150) selon l'une des trois revendications précédentes, comprenant une pluralité de bielles de longueur variable (10) et dans lequel le circuit fluidique de pilotage (60) du vilebrequin (100) est commun auxdites bielles (10).

19. Moteur à rapport volumétrique variable piloté (150) selon l'une des revendications 12 à 14, comprenant une pluralité de bielles de longueur variable (10) et dans lequel le vilebrequin (100) comprend au moins un circuit fluidique de pilotage (60) dédié à chacune des bielles (10) .

## Patentansprüche

1. Kurbelwelle (100) für einen Motor mit gesteuertem variablem Volumenverhältnis (150), die eine Drehachse aufweist, die eine Längsachse (y) definiert und mindestens einen Kurbelzapfen (2), mindestens einen Zapfen (3), die durch einen Verbindungsarm (4) verbunden sind, und mindestens ein Steuerelement (50) umfasst, das sich translatorisch entlang der Längsachse (y) bewegen kann, um mit einem Stellglied (11) eines Systems zur Einstellung der Länge eines Pleuels (10) zusammenzuwirken,
wobei die Kurbelwelle (100) **dadurch gekennzeichnet ist, dass**:
• das Steuerelement (50), das an dem Verbindungsarm (4) angeordnet ist, einen ringförmigen Teil (51) umfasst, der koaxial zum Kurbelzapfen (2) ist und unabhängig von der Winkelposition der Kurbelwelle (100) einen kontinuierlichen Kontakt mit dem Stellglied (11) des Systems zur Einstellung der Länge des Pleuels (10) herstellen kann,
• die Kurbelwelle (100) einen Steuerfluidkreislauf (60) umfasst, um das Steuerelement (50) entlang der Längsachse (y) zu bewegen.

2. Kurbelwelle (100) nach dem vorhergehenden Anspruch, wobei das Steuerelement (50) in einem ringförmigen Hohlraum (40) des Verbindungsarms (4) an einem Ende des Kurbelzapfens (2) angeordnet ist und wobei der Fluidkreislauf (60) eine Öffnung (61) umfasst, die in den Hohlraum (40) mündet.

3. Kurbelwelle (100) nach dem vorhergehenden Anspruch, umfassend einen Bügel (45), der an dem Verbindungsarm (4) befestigt ist, um einen Endanschlag für das Steuerelement (50) auszubilden.

4. Kurbelwelle (100) nach Anspruch 1, wobei das Steuerelement (50) auf dem Verbindungsarm (4) angeordnet ist und mit zwei Vorsprüngen (46, 47) zusammenwirkt, die an einem Ende des Kurbelzapfens (2) oder in einem an den Kurbelzapfen (2) angrenzenden Teil des Verbindungsarms (4) ausgebildet sind, und wobei der Fluidkreislauf (60) eine Öffnung (61) umfasst, die zwischen den beiden Vorsprüngen (46, 47) mündet.

5. Kurbelwelle (100) nach einem der vorhergehenden Ansprüche, wobei der Steuerfluidkreislauf (60) die Translationsbewegung des Steuerelements (50) in einer ersten Richtung (Y1) durch Druck eines Fluids regelt.

6. Kurbelwelle (100) nach einem der vorhergehenden Ansprüche, wobei der Steuerfluidkreislauf (60) die Translationsbewegung des Steuerelements (50) in einer zweiten Richtung (Y2), die der ersten Richtung (Y1) entgegengesetzt ist, durch Unterdruck regelt.

7. Kurbelwelle (100) nach einem der beiden vorhergehenden Ansprüche, wobei das Fluid ein Gas oder eine Flüssigkeit ist.

8. Kurbelwelle (100) nach Anspruch 5 oder 6, umfassend ein Rückstellorgan zum translatorischen Bewegen des Steuerelements (50) entlang der Längsachse (y) in einer zweiten Richtung (Y2), die der ersten Richtung (Y1) entgegengesetzt ist.

9. Kurbelwelle (100) nach einem der vorhergehenden Ansprüche, wobei der Steuerfluidkreislauf (60) durch Bohrungen (62) in der Kurbelwelle (100) ausgebildet ist, die über deren gesamte Länge von einem ihrer Enden (1) aus in Verbindung stehen.

10. Kurbelwelle (100) nach einem der vorhergehenden Ansprüche, umfassend ein Steuerelement (50), das an jedem Verbindungsarm (4) auf beiden Seiten jedes Kurbelzapfens (2) angeordnet ist.

11. Kurbelwelle (100) nach dem vorhergehenden Anspruch, wobei die beiden Steuerelemente (50), die auf beiden Seiten des Kurbelzapfens (2) angeordnet sind, von zwei getrennten Steuerfluidkreisläufen (60) geregelt werden.

12. Kurbelwelle (100) nach Anspruch 10, wobei die beiden auf beiden Seiten des Kurbelzapfens (2) angeordneten Steuerelemente (50) durch ein und denselben Steuerfluidkreislauf (60) geregelt werden.

13. Kurbelwelle (100) nach dem vorhergehenden Anspruch, wobei der Steuerfluidkreis (60) mindestens einen Fluidverteiler zum Öffnen oder Schließen der Fluidverbindung zu einem der beiden Steuerelemente (50) in Abhängigkeit vom Druckniveau im Fluidkreislauf (60) umfasst.

14. Kurbelwelle (100) nach einem der vier vorhergehenden Ansprüche, wobei ein Kurbelzapfen (2) so konfiguriert ist, dass er zwei Pleuel (10) aufnimmt.

15. Gesteuerter Motor mit variablem Volumenverhältnis (150), umfassend:
• einen Motorblock (110),
• eine Kurbelwelle (100) nach einem der vorhergehenden Ansprüche, die in dem Motorblock (110) angeordnet ist,
• mindestens einen Pleuel (10) variabler Länge, der mit einem Kurbelzapfen (2) der Kurbelwelle (100) verbunden ist, wobei der Pleuel (10) ein System zur Einstellung der Länge und ein Stellglied (11) des Systems umfasst, das an einer Flanke des Pleuelkopfes (10) positioniert ist.

16. Gesteuerter Motor mit variablem Volumenverhältnis (150) nach dem vorhergehenden Anspruch, wobei die Kurbelwelle (100) über eine dichte Drehverbindung mit mindestens einem externen Steuersystem verbunden ist, wobei das externe Steuersystem so konfiguriert ist, dass es ein Fluid in den Steuerfluidkreislauf (60) der Kurbelwelle (100) leitet, und von einer Einheit zur Einstellung des Motors (150) gesteuert wird.

17. Gesteuerter Motor mit variablem Volumenverhältnis (150) nach einem der beiden vorhergehenden Ansprüche, wobei der Pleuel (10) teleskopisch oder exzentrisch, zweifach, dreifach oder stufenlos ist.

18. Gesteuerter Motor mit variablem Volumenverhältnis (150) nach einem der drei vorhergehenden Ansprüche, der eine Vielzahl von Pleueln (10) variabler Länge umfasst und wobei der Steuerfluidkreislauf (60) der Kurbelwelle (100) den Pleueln (10) gemeinsam ist.

19. Gesteuerter Motor mit variablem Volumenverhältnis (150) nach einem der Ansprüche 12 bis 14, der eine Vielzahl von Pleueln variabler Länge (10) umfasst und wobei die Kurbelwelle (100) mindestens einen jedem der Pleuel (10) zugeordneten Steuerfluidkreislauf (60) umfasst.

## Claims

1. Crankshaft (100) for a controlled variable compression ratio engine (150), comprising an axis of rotation which defines a longitudinal axis (y) and comprising at least one crank pin (2), at least one journal (3) connected by a connecting arm (4), and at least one control element (50) which is capable of translationally moving along the longitudinal axis (y) in order to engage with an actuator (11) of a system for adjusting the length of a connecting rod (10),
the crankshaft (100) being **characterized in that**:
• the control element (50), which is arranged at the connecting arm (4), comprises an annular portion (51) which is coaxial with the crank pin (2) and capable of establishing continuous contact with the actuator (11) of the system for adjusting the length of the connecting rod (10), regardless of the angular position of the crankshaft (100),
• the crankshaft (100) comprises a fluid control circuit (60) for moving the control element (50) along the longitudinal axis (y).

2. Crankshaft (100) according to the preceding claim, wherein the control element (50) is arranged in an annular cavity (40) of the connecting arm (4) at one end of the crank pin (2) and wherein the fluid circuit (60) comprises an opening (61) which opens into the cavity (40).

3. Crankshaft (100) according to the preceding claim, comprising a yoke (45) which is secured to the connecting arm (4) in order to form an end-of-stroke stop for the control element (50).

4. Crankshaft (100) according to claim 1, wherein the control element (50) is arranged on the connecting arm (4) and engages with two shoulders (46, 47) arranged at one end of the crank pin (2) or in a portion of the connecting arm (4) adjoining the crank pin (2), and wherein the fluid circuit (60) comprises an opening (61) which opens between the two shoulders (46, 47).

5. Crankshaft (100) according to any of the preceding claims, wherein the fluid control circuit (60) controls the translational movement of the control element (50) in a first direction (Y1) by the pressure of a fluid.

6. Crankshaft (100) according to any of the preceding claims, wherein the fluid control circuit (60) controls the translational movement of the control element (50) in a second direction (Y2) opposite to the first direction (Y1) by negative pressure.

7. Crankshaft (100) according to either of the two preceding claims, wherein the fluid is a gas or a liquid.

8. Crankshaft (100) according to either claim 5 or claim 6, comprising a return member for translationally moving the control element (50) along the longitudinal axis (y) in a second direction (Y2) opposite to the first direction (Y1).

9. Crankshaft (100) according to any of the preceding claims, wherein the fluid control circuit (60) is formed by bores (62) in the crankshaft (100) which communicate over the entire length of said crankshaft from one of its ends (1).

10. Crankshaft (100) according to any of the preceding claims, comprising a control element (50) which is arranged at each connecting arm (4) on either side of each crank pin (2).

11. Crankshaft (100) according to the preceding claim, wherein the two control elements (50) arranged on either side of the crank pin (2) are controlled by two separate fluid control circuits (60).

12. Crankshaft (100) according to claim 10, wherein the two control elements (50) arranged on either side of the crank pin (2) are controlled by the same fluid control circuit (60).

13. Crankshaft (100) according to the preceding claim, wherein the fluid control circuit (60) comprises at least one fluid distributor for opening or closing the fluid communication to either of the two control elements (50) on the basis of the pressure level in the fluid circuit (60).

14. Crankshaft (100) according to any of the four preceding claims, wherein a crank pin (2) is configured to receive two connecting rods (10).

15. Controlled variable compression ratio engine (150), comprising:
• an engine block (110),
• a crankshaft (100) according to any of the preceding claims, which is arranged in the engine block (110),
• at least one connecting rod (10) of variable length associated with a crank pin (2) of the crankshaft (100), the connecting rod (10) comprising a length adjustment system and an actuator (11) of said system which is positioned at a side of the head of the connecting rod (10).

16. Controlled variable compression ratio engine (150) according to the preceding claim, wherein the crankshaft (100) is connected by a sealed rotating connection to at least one external control system, said system being configured to transport a fluid into the fluid circuit (60) for controlling said crankshaft (100) and being controlled by an engine control unit (150).

17. Controlled variable compression ratio engine (150) according to either of the two preceding claims, wherein the connecting rod (10) is telescopic or eccentric, bi-rate, tri-rate or continuous rate.

18. Controlled variable compression ratio engine (150) according to any of the three preceding claims, comprising a plurality of connecting rods (10) of variable length and wherein the fluid control circuit (60) of the crankshaft (100) is common to said connecting rods (10).

19. Controlled variable compression ratio engine (150) according to any of claims 12 to 14, comprising a plurality of connecting rods (10) of variable length and wherein the crankshaft (100) comprises at least one fluid control circuit (60) which is dedicated to each of the connecting rods (10).
